# EUROPEAN PATENT APPLICATION

(11) **EP 4 810 242 A1**
(43) Date of publication of application: **23.09.2026**
(21) Application number: 26163863.9
(22) Date of filing: 11.03.2026
(51) Int. Cl.: B32B 3/26, B32B 7/12, B32B 15/14, B32B 15/20, B32B 21/02, B32B 21/06, B32B 27/10, B32B 29/00, B44C 3/02

(54) **MULTIPLAYER PANEL AND MANUFACTURING METHOD THEREOF**

(30) Priority: 19.03.2025 IT 202500005655
(71) Applicant: GI.Gar S.r.l., 60022 Castelfidardo (AN) (IT)
(72) Inventor: GAROFOLI, Fernando, 60022 CASTELFIDARDO (AN) (IT)
(74) Representative: Baldi, Claudio

(57) **Abstract**

Multilayer panel (100) comprising a supporting panel (1) comprising a first face (11) and a second face (12) opposite each other, an inner laminate assembly (G) comprising at least one laminate (2, 4, 5) fixed to the second face (12) of the supporting panel (1); said at least one laminate (2, 4, 5) comprises a first face (21, 41, 51) facing the second face (12) of the supporting panel (1) and a second face (22, 42, 52) opposite said first face (21, 41, 51); the multilayer panel (100) comprises an outer laminate (3) fixed to the inner laminate assembly (G) and comprises a first face (31) facing the inner laminate assembly (G), and a second face (32) opposite said first face (31); a groove (F) cuts the outer laminate (3) for its entire thickness so that the second face (22, 42, 52) of the at least one laminate (2, 4, 5) of the inner laminate assembly (G) is exposed.

## Description

The present patent application for industrial invention relates to a multilayer panel and to a method for manufacturing said multilayer panel.

In particular, the field of reference is that of furniture and doors, in which panels of different materials are used to make door leaves, cabinet panels, drawer front panels, or decorative cladding applied directly to a wall or a ceiling.

Due to aesthetic and design reasons, there is an increasing demand on the market for panels provided with one or more grooves that reproduce complex geometric, floral, or similar patterns on the surface of the panel.

Such a technique is technically known as "pantographing", which consists in reproducing a design on a reduced or enlarged scale, using a tool that cuts the material following the contour of a preset model. Today, pantographing is performed with computer numerical control (CNC) machines that faithfully reproduce a design on the surface of a panel with extremely precise details. The tool can be a mechanical milling bit, an electric cutting tip, or even a laser cutting head.

In recent years, multilayer panels have also been developed, consisting of a supporting panel made of chipboard or similar material, whereon a cladding that is commonly known as "laminate" is applied, consisting of a substrate and a decorative film with a specific color or pattern.

In such a case, pantographing provides for cutting a groove for the entire thickness of the laminate down to the supporting panel. When the supporting panel is reached, the groove is of a different color and material compared to the decorative film of the laminate, creating an extremely attractive and elegant finish for customers.

However, the color of the background of the groove is determined by the type of supporting panel used. Furthermore, in many occasions, the material of the supporting panel is not a high-quality material and does not have a high aesthetic value.

In view of the above, in order to obtain grooves with a specific color to match or contrast with the color or pattern on the decorative film of the laminate, the grooves are painted with the desired colored paint.

However, such a solution that provides for coloring the groove with paint is impaired by several drawbacks.

Firstly, the painting of the groove is a complex and time-consuming operation.

Moreover, the coloring of a groove requires considerable precision, as it cannot be removed once applied, and therefore the presence of color smudges will compromise the panel.

Furthermore, the paint applied to the groove may smudge over time, for example if the panel comes into contact with water or if the panel is installed in very humid environments. The presence of smudges or color loss in the groove will compromise the aesthetics of the multilayer panel, which will be ruined and therefore will need to be replaced.

Document US2022024189A1 describes a veneered element comprising a substrate, a first layer arranged on the substrate, a second layer arranged on the first layer, and a veneer layer arranged on the second layer. The veneer layer is made of wood or cork and has defects, such as holes, knots, or cracks, which are suitable for being partially filled by the second layer that becomes transparent after pressing, in such a way that the first layer underneath is visible.

However, the use of a natural wood or cork veneer layer has significant technical limitations. In particular, the use of natural materials limits the design possibilities and industrial reproducibility of specific textures or decorative patterns. Furthermore, the durability characteristics of the product strongly depend on the type of natural material used.

Document WO2023237951A1 describes a composite material comprising a single laminate attached to a flexible substrate. A plurality of slots are made in the laminate to make said laminate flexible, so that the composite material can be applied to both flat and curved objects.

The purpose of the present invention is to overcome the drawbacks of the prior art by devising a new multilayer panel provided with at least one groove of a different color or pattern with respect to the front and is more water-resistant than the multilayer panels with grooves according to the prior art.

Another purpose of the present invention is to devise a multilayer panel with grooves that is aesthetically appealing and inviting.

An additional purpose of the present invention is to devise a multilayer panel that is simple to manufacture and inexpensive.

A further purpose is to devise a multilayer panel with grooves of different colors.

Yet another purpose of the present invention is to devise a new method for manufacturing said multilayer panel.

These purposes are achieved in accordance with the invention with the characteristics listed in the attached independent claim 1.

Advantageous embodiments appear from the dependent claims.

The multilayer panel according to the invention is defined by claim 1.

For greater clarity, the description of the multilayer panel according to the invention and the manufacturing method thereof continues with reference to the attached drawings, which are for illustrative purposes only and not limiting, wherein:
- Fig. 1 is a schematic sectional view of a first embodiment of a multilayer panel according to the invention;
- Fig. 2 is a schematic sectional view of a second embodiment of a multilayer panel according to the invention;
- Fig. 3 is a schematic sectional view of a third embodiment of a multilayer panel according to the invention;
- Fig. 4 is an axonometric view of the first embodiment of the multilayer panel shown in Fig. 1;
- Fig. 5 is an axonometric view of the second embodiment of the multilayer panel shown in Fig. 2;
- Figs. 6-6C are schematic sectional views of a method for manufacturing the multilayer panel shown in Fig. 1.

With reference to the attached Figures, a multilayer panel according to the invention, which is generally indicated with reference numeral (100), and a method for manufacturing said multilayer panel according to the invention are described.

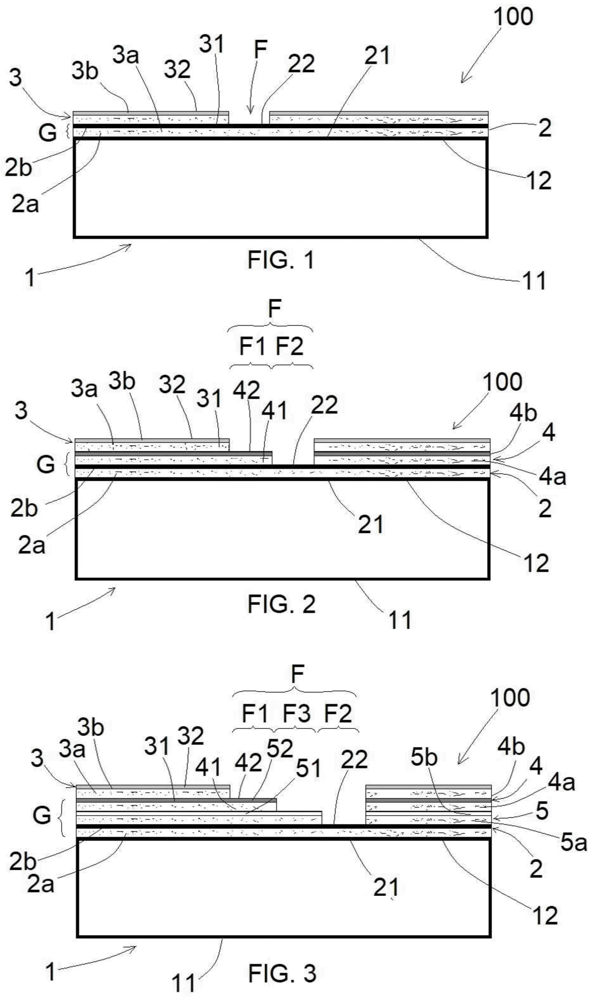

Figs. 1, 2, and 3 show three different embodiments of the multilayer panel (100) according to the invention.

In all three embodiments of the multilayer panel (100), the multilayer panel (100) comprises:
- a supporting panel (1) comprising a first face (11) and a second face (12) opposite each other;
- an inner laminate assembly (G) comprising at least one laminate (2, 4, 5) fixed to the second face (12) of the supporting panel (1); said at least one laminate (2, 4, 5) comprises a first face (21, 41, 51) facing the second face (12) of the supporting panel (1) and a second face (22, 42, 52) opposite said first face (21, 41, 51);
- an outer laminate (3) fixed to the inner laminate assembly (G); said outer laminate (3) comprises a first face (31) facing the inner laminate assembly (G) and a second face (32) opposite said first face (31) and suitable for remaining visible;
- at least one groove (F) that cuts the outer laminate (3) for its entire thickness so that the second face (22, 42, 52) of the at least one laminate (2, 4, 5) of the inner laminate assembly (G) is exposed.

Advantageously, the second face (22, 42, 52) of the at least one laminate (2, 4, 5) of the inner laminate assembly (G) and the second face (32) of the outer laminate (3) are different in color and/or patterns and/or surface finish.

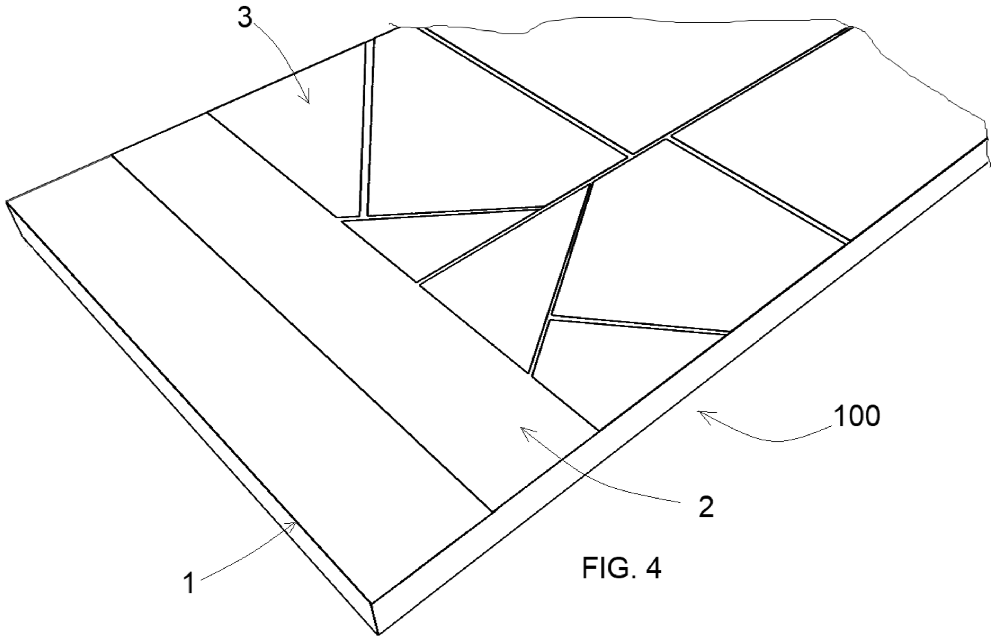

With reference to Figs. 1 and 4, a first embodiment of the multilayer panel (100) is shown.

In this embodiment, the inner laminate assembly (G) comprises a single laminate (2) comprising said first face (21) fixed to the second face (12) of the supporting panel (1) and said second face (22) fixed to the outer laminate (3). The second face (22) of the laminate (2) of the inner laminate assembly (G) and the second face (32) of the outer laminate (3) are different in color and/or pattern and/or surface finish.

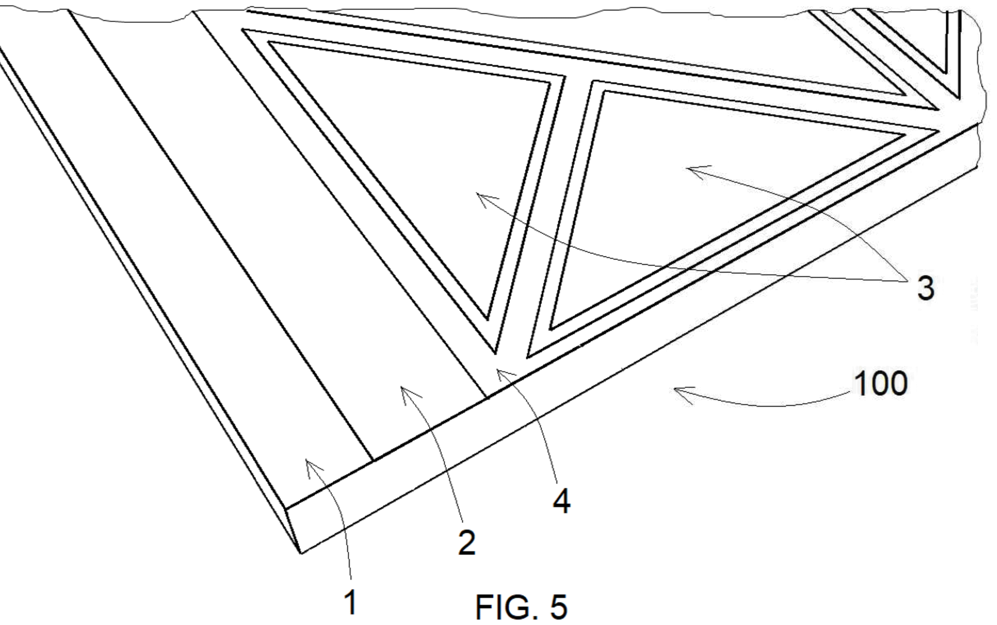

With reference to Figs. 2 and 5, a second embodiment of the multilayer panel (100) is shown.

In this second embodiment, the inner laminate assembly (G) comprises two laminates (2, 4) fixed and superimposed on each other, namely a first laminate (2) positioned near the supporting panel (1) and a second laminate (4) positioned near the outer laminate (3). Both laminates (2, 4) have a first face (21, 41) facing the supporting panel (1) and a second face (22, 42) facing the opposite direction.

The second faces (22, 42, 32) of the laminates (2, 4, 3) are different in color and/or pattern and/or surface finish.

In this embodiment, the at least one groove (F) cut on the outer laminate (3) has sections (F1, F2) with different depths, namely:
- a first section (F1) with depth equal to the thickness of the outer laminate (3) so that the second face (42) of the second laminate (4) is exposed;
- a second section (F2) with depth equal to the sum of the thickness of the outer laminate (3) and of the second laminate (4) so that the second face (22) of the first laminate (2) is exposed.

With reference to Fig. 3, a third embodiment of the multilayer panel (100) is shown.

In this third embodiment, in addition to the first laminate (2) and to the second laminate (4) that are present in the second embodiment, the inner laminate assembly (G) comprises at least one intermediate laminate (5) interposed between said first laminate (2) and the second laminate (4) and having a first face (51) facing the first laminate (1) and a second face (52) facing the second laminate (4).

The second face (52) of the intermediate laminate (5) differs in color and/or pattern and/or surface finish from the second faces (22, 32, 42) of the other laminates (2, 3, 4).

In this embodiment, the groove (F) made on the outer laminate (3) has sections (F1, F2, F3) with different depths, namely:
- a first section (F1) with depth equal to the thickness of the outer laminate (3) so that the second face (42) of the second laminate (4) is exposed;
- a second section (F2) with depth equal to the sum of the thickness of the outer laminate (3), of the second laminate (4), and of the intermediate laminate (5), so that the second face (22) of the first laminate (2) is exposed;
- a third section (F3) with greater depth than the depth of the first section (F1) and lower depth than the depth of the second section (F2) so that the second face (52) of the intermediate laminate (5) is exposed; more precisely, the third section (F3) has a depth equal to the sum of the thickness of the outer laminate (3) and of the second laminate (4) so that the second face (52) of the intermediate laminate (5) is exposed.

Although in Fig. 3 only one intermediate laminate (5) is interposed between the first laminate (2) and the second laminate (4), the inner laminate assembly (G) may comprise additional intermediate laminates (5). Obviously, in such a case, the groove (F) may have additional sections in addition to the third section (F3) of depth such that the various second faces (52) of all the intermediate laminates (5) are exposed and visible.

Preferably, each of said laminates (2, 3, 4, 5) is composed of a layered material comprising a substrate (2a, 3a, 4a, 5a) whereon said first face (21, 31, 41, 51) of the laminate (2, 3, 4, 5) is formed, and a decorative film (2b, 3b, 4b, 5b) fixed to the substrate (2a, 3a, 4a, 5a) whereon said second face (22, 32, 42, 52) of the laminate (2, 3, 4, 5) is formed.

Otherwise said, the term "laminate" refers to a layered composite material obtained by pressing one or more sheets impregnated with thermosetting resins, comprising a superficial decorative layer or film (2b, 3b, 4b, 5b) and a supporting layer or substrate (2a, 3a, 4a, 5a) with wooden or polymer base.

Said laminates are joined to each other or to the supporting panel (1) by means of a layer of adhesive interposed between the laminates (2, 3, 4, 5) or between a laminate (2) and the supporting panel (1).

The adhesive preferably consists of a polyurethane adhesive or other adhesive capable of ensuring a perfect glueing of the laminates to each other or of a laminate to the supporting panel (1).

More precisely, by way of example, the substrate (2a, 3a, 4a, 5a) comprises a layering of sheets of paper impregnated with phenolic resins.

The decorative film (2b, 3b, 4b, 5b) of the laminate (2, 3, 4, 5) is basically a film or sheet decorated using different printing technologies.

The decorative film (2b, 3b, 4b, 5b) whereon the second face of the laminate is obtained can be decorated with a uniform color or with patterns of different colors or with a reproduction of natural elements, such as wood, stone, marble, and the like.

Advantageously, each laminate (2, 4, 3, 5) of the multilayer panel (100) may comprise a transparent protective film (not shown in the attached figures) disposed on the decorative film (2b, 4b, 3b, 5b) or on the second face (22, 32, 42, 52) .

The transparent protective film is waterproof and protects the decorative film, or the second face of the laminate (2, 3, 4, 5), from water, shocks, erosion, and scratches.

These types of laminates (2, 3, 4, and 5) are commercially known as:
- High Pressure Laminate (HPL)
- Continuous Pressure Laminate (CPL).

In a preferred embodiment of the invention, the outer laminate (3) has a thickness comprised between 0.25 mm and 0.35 mm, preferably 0.3 mm, whereas the laminates (2, 4, 5) of the inner laminate assembly (G) have a thickness comprised between 0.45 mm and 1 mm, preferably 0.5 mm.

The supporting panel (1) can be an MDF (Medium Density Fiberboard) or HDF (High Density Fiberboard) wood-based panel, i.e., two wood-based materials obtained by pressing wood fibers together with resin or glue at high temperatures.

Alternatively, the supporting panel (1) may be made of other wood-based materials, such as chipboard, melamine-faced chipboard, or plywood, formed by several layers of wood panels glued together to achieve the desired thickness.

It should be noted that although the supporting panel (1) is preferably made of a wood-based material, according to alternative embodiments of the invention, said supporting panel (1) may be made of plastic, metal, or any other material suitable for supporting the laminates (2, 3, 4, 5). By way of example, the supporting panel (1) may be made of aluminum.

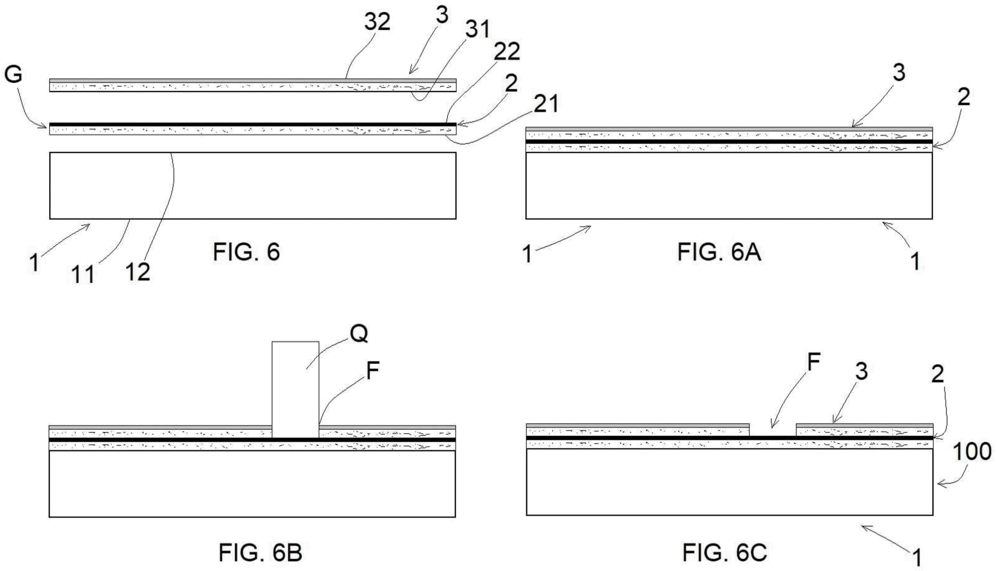

Hereinafter, with reference to Figs. 6-6C, a method for manufacturing the multilayer panel (100) according to the invention is described. In particular, Figs. 6-6C show the method for manufacturing the multilayer panel (100) shown in Figs. 1 and 4.

The method for manufacturing the multilayer panel (100) comprises the following operational steps.

Firstly, with reference to Fig. 6, the following are to be provided:
- the supporting panel (1) comprising the first face (11) and the second face (12),
- an inner laminate assembly (G) comprising a laminate (2) comprising the first face (11) and the second face (12); and
- an outer laminate (3) comprising the first face (31) and the second face (32).

Then, with reference to Fig. 6A, the inner laminate assembly (G) is fixed to the second face (12) of the supporting panel (1) with the first face (21) of the laminate (2) facing the supporting panel (1) and the second face (22) facing in the opposite direction.

Furthermore, with reference to Fig. 6A, the outer laminate (3) is fixed to the inner laminate assembly (G) with the first face (31) facing the inner laminate assembly (G) and the second face (32) facing in the opposite direction.

In a first embodiment of the invention, the fixing of the inner laminate assembly (G) to the supporting panel (1) precedes the fixing of the outer laminate (3) to the inner laminate assembly (G).

Instead, in a second embodiment, the fixing of the outer laminate (3) to the inner laminate assembly (G) precedes the fixing of the inner laminate assembly (G) to the supporting panel (1). Otherwise said, in this second embodiment, initially, the laminates are fixed together to form a laminate package and then said laminate package is fixed to the supporting panel (1).

Advantageously, the fixing of the inner laminate assembly (G) to the supporting panel (1) and the fixing of the outer laminate (3) to the inner laminate assembly (G) are obtained by applying adhesive between the inner laminate assembly (G) and the supporting panel (1) and between the inner laminate assembly (G) and the outer laminate (3).

With reference to Figs. 6B and 6C, a groove (F) is cut by means of a cutting tool (Q) that cuts the outer laminate (3) for its entire thickness so that the second face (2) of the laminate (2) of the inner laminate assembly (G) is exposed.

For illustrative purposes, said cutting tool (Q) consists of a pantograph with a floating-head cutting tool or a disc cutter.

In order to manufacture multilayer panels (100) provided with an inner laminate assembly (G) having multiple superimposed laminates, the manufacturing method of the multilayer panel (100) is essentially the same, but in this case, one or more grooves with different depth can be made so that all the second faces (22, 42, 52) of the laminates (2, 4, 5) of the inner laminate assembly (G) are visible.

Preferably, the multilayer panel (100) according to the invention can be used as a hinged door leaf, or as a sliding door leaf, or as a wall or ceiling cladding panel, or as a drawer front panel or a cabinet door panel, and in many other applications where a panel is to be used.

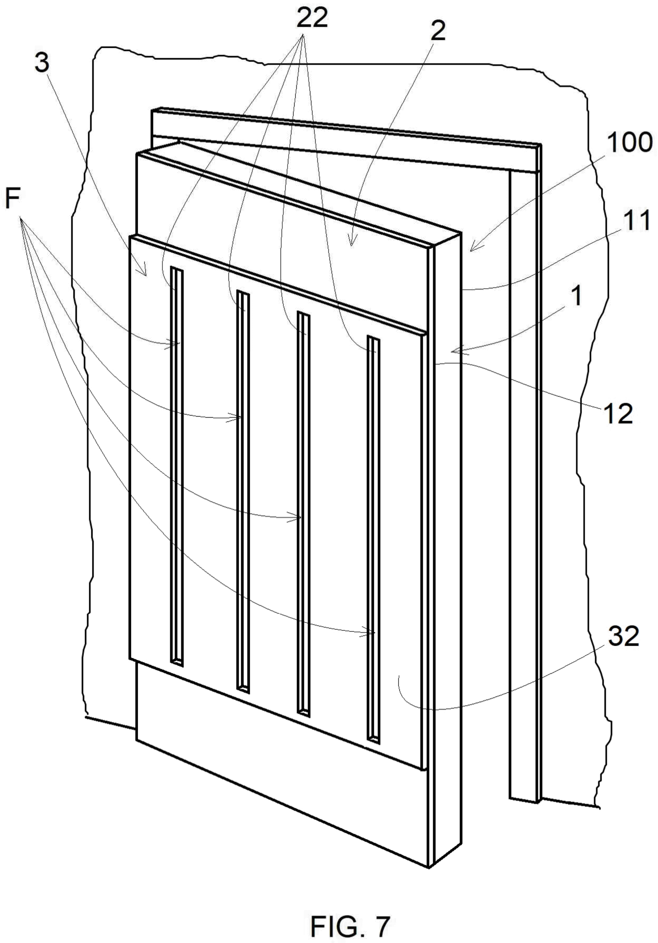

By way of example, in Fig. 7, the multilayer panel (100) is used as a hinged door leaf. In the example shown in Fig. 7, the grooves (F) are four straight grooves parallel to each other that cut the outer laminate (3) for its entire thickness, thereby revealing the second face (22) of the laminate (2) of the laminate assembly (G) at the bottom of the groove.

It should be noted that, although in the attached figures the inner laminate assembly (G) and the outer laminate (3) are disposed only on the second face (12) of the multilayer panel (100), nothing prevents the inner laminate assembly (G) and the outer laminate (3) from being disposed also on the first face of the multilayer panel (100). Such a solution can be adopted whenever the multilayer panel (100) is to be used for components in which both faces are suitable for remaining visible. For illustrative purposes, such components are a hinged door or a sliding door.

Following the above description, the advantages of the present invention are now evident.

In fact, the provision of the inner laminate assembly (G) between the outer laminate (3) and the supporting panel (1) allows for making a precise groove with controlled depth to remove one or more laminates (3, 4, 5), revealing the second faces (42, 52, 22) of the laminates of the inner laminate assembly (G), obtaining color contrast effects based on the chosen combinations, or, alternatively, creating customized color patterns thanks to the calibrated control of the groove depth (F).

The groove or grooves (F) made on the outer laminate (3) can follow geometric trajectories or free trajectories to create particularly attractive designs or shapes. By way of example, the grooves (F) may consist of straight grooves that are all parallel to each other, or grooves that are parallel to each other but wavy, or grooves that intersect with each other to create a grid pattern or a particular geometric shape. The grooves (F) may also follow trajectories that reproduce objects, such as flowers, leaves, animals, or even fantasy characters.

Furthermore, if the inner laminate assembly (G) is composed of several laminates (2, 4, 5), it is possible to reduce or increase the depth of the grooves along the same trajectory, revealing the second faces (22, 42, 52) of the laminates (2, 4, 5) and creating particular color effects along the same groove (F).

Finally, it should be noted that the use of laminates (2, 4, 5) provided with a protective film makes the panel and, in particular, the bottom of the grooves (F) water-resistant. Otherwise said, such a multilayer panel is no longer affected by the problems that afflict the multilayer panels of the prior art, in which the bottom of the groove is painted and therefore may smudge when in contact with water or moisture.

It should be noted that the laminates (2, 3, 4, 5) can be manufactured by the applicant or purchased from third-party suppliers, provided that the laminates (2, 3, 4, 5) have the characteristics described in the present invention.

Numerous variations and detailed modifications can be made to the present embodiment of the invention, within the reach of a person skilled in the art, however falling within the scope of the invention as expressed by the appended claims.

## Claims

1. Multilayer panel (100) comprising:
- a supporting panel (1) comprising a first face (11) and a second face (12) opposite each other;
- an inner laminate assembly (G) comprising at least one laminate (2, 4, 5) fixed to the second face (12) of the supporting panel (1); said at least one laminate (2, 4, 5) comprises a first face (21, 41, 51) facing the second face (12) of the supporting panel (1) and a second face (22, 42, 52) opposite said first face (21, 41, 51);
- an outer laminate (3) fixed to the inner laminate assembly (G); said outer laminate (3) comprises a first face (31) facing the inner laminate assembly (G) and a second face (32) opposite said first face (31);
- at least one groove (F) cutting the outer laminate (3) for its entire thickness so that the second face (22, 42, 52) of the at least one laminate (2, 4, 5) of the inner laminate assembly (G) is exposed.

2. The multilayer panel (100) according to claim 1, wherein the second face (22, 42, 52) of the at least one laminate (2, 4, 5) of the inner laminate assembly (G) and the second face (32) of the outer laminate (3) differ in color and/or decoration and/or surface finish.

3. The multilayer panel (100) according to claim 1 or 2, wherein said at least one inner laminate assembly (G) comprises two laminates (2, 4) that are fixed and superimposed on each other, namely a first laminate (2) located near the supporting panel (1) and a second laminate (4) located near the outer laminate (3);
wherein said at least one groove (F) cut on the outer laminate (3) has sections (F1, F2) with different depths, namely:
- a first section (F1) with depth equal to the thickness of the outer laminate (3) so that the second face (42) of the second laminate (4) is exposed;
- a second section (F2) with depth equal to the sum of the thickness of the outer laminate (3) and of the second laminate (4) so that the second face (22) of the first laminate (2) is exposed.

4. The multilayer panel (100) according to claim 1 or 2, wherein said at least one inner laminate assembly (G) comprises a first laminate (2) disposed near the supporting panel (1), a second laminate (4) disposed near the outer laminate (3) and at least one intermediate laminate (5) interposed between the first laminate (2) and the second laminate (4); wherein said at least one groove (F) formed on the outer laminate (3) has sections (F1, F2, F3) with different depths, namely:
- a first section (F1) with depth equal to the thickness of the outer laminate (3) so that the second face (42) of the second laminate (4) is exposed;
- a second section (F2) with depth equal to the sum of the thickness of the outer laminate (3), of the second laminate (4) and of said at least one intermediate laminate (5), so that the second face (22) of the first laminate (2) is exposed;
- at least one additional section (F3) with depth greater than the depth of the first section (F1) and lower than the depth of the second section (F2) so that the second face (52) of the intermediate laminate (5) is exposed.

5. The multilayer panel (100) according to claim 3 or 4, wherein the second faces (22, 42, 52) of said laminates (2, 4, 5) of the inner laminate assembly (G) differ in color and/or decoration and/or surface finish.

6. The multilayer panel (100) according to any one of the preceding claims, wherein each laminate (2, 3, 4, 5) is made of a layered material comprising a substrate (2a, 3a, 4a, 5a) whereon said first face (21, 31, 41, 51) of the laminate (2, 3, 4, 5) is formed, and a decorative film (2b, 3b, 4b, 5b) that is fixed to the substrate (2a, 3a, 4a, 5a) whereon said second face (22, 32, 42, 52) of the laminate (2, 3, 4, 5) is formed.

7. The multilayer panel (100) according to any one of the preceding claims, wherein each laminate (2, 3, 4, 5) comprises a transparent protective film disposed on the second face (22, 32, 42, 52).

8. The multilayer panel (100) according to any one of the preceding claims wherein an adhesive is provided between two adjacent laminates and between a laminate and the supporting panel (2).

9. The multilayer panel (100) according to any one of the preceding claims, wherein the outer laminate (3) has a thickness of between 0.25 mm and 0.35 mm, whereas said at least one laminate (2, 4, 5) of the inner laminate assembly (G) has a thickness of between 0.45 mm and 1 mm, preferably 0.5 mm.

10. Door leaf comprising a multilayer panel (100) according to any one of the preceding claims.

11. Manufacturing method of a multilayer panel (100) according to any one of claims 1 to 9; said method providing for:
- providing the supporting panel (1) comprising the first face (11) and the second face (12), the inner laminate assembly (G) comprising at least one laminate (2, 4, 5) comprising the first face (21, 41, 51) and the second face (22, 42, 52), and the outer laminate (3) comprising the first face (31) and the second face (32);
- fixing the inner laminate assembly (G) to the second face (12) of the supporting panel (1) and fixing the outer laminate (3) to the inner laminate assembly (G);
- making a groove (F) on the outer laminate (3) that cuts the outer laminate (3) for its entire thickness so that the second face (22, 42, 52) of the at least one laminate (2, 4, 5) of the inner laminate assembly (G) is exposed.

12. The method according to claim 11, wherein said step of fixing the inner laminate assembly (G) to the supporting panel (1) and of fixing the outer laminate (3) to the inner laminate assembly (G) is performed by applying an adhesive between the inner laminate assembly (G) and the supporting panel (1) and between the inner laminate assembly (G) and the outer laminate (3).
